# EUROPEAN PATENT APPLICATION

(11) **EP 4 478 771 A1**
(43) Date of publication of application: **18.12.2024**
(21) Application number: 22939957.1
(22) Date of filing: 20.12.2022
(51) Int. Cl.: H04W 24/02

(54) **MR-DC FULL CONFIGURATION METHOD AND APPARATUS, COMPUTER DEVICE, AND READABLE MEDIUM**

(30) Priority: 28.04.2022 CN 202210470226
(71) Applicant: ZTE Corporation, Shenzhen, Guangdong 518057 (CN)
(72) Inventor: YANG, Min, Shenzhen, Guangdong 518057 (CN); DU, Gaopeng, Shenzhen, Guangdong 518057 (CN); HUANG, Xueying, Shenzhen, Guangdong 518057 (CN); LONG, Gang, Shenzhen, Guangdong 518057 (CN)
(74) Representative: Canzler & Bergmeier Patentanwälte Partnerschaft mbB
(86) International application number: PCT/CN2022/140338
(87) International publication number: WO 2023/207148

(57) **Abstract**

The present application provides an MR-DC full configuration method. The method is applied to a target MN-CU, and comprises: in response to determining that a target MN-DU completes full configuration, sending an indication message to a target SN, wherein the indication message is used for instructing the target SN to execute full configuration. According to the embodiments of the present invention, after the target MN-DU completes full configuration, the target MN-CU instructs, by means of an indication message, the target SN-CU to execute full configuration, so that the target SN-CU can instruct the target SN-DU to execute full configuration, thereby implementing full configuration of the target SN. The embodiments of the present invention can compensate for deficiencies of standard protocols, and supports full configuration of UE, MN, and SN when mobility handover is performed in an MR-DC network; thus, the probability of packet loss or UE being released in a service process is reduced, and the continuity of a dual connectivity user service is improved. The present invention also provides an MR-DC full configuration apparatus, a computer device, and a readable medium.

## Description

### CROSS REFERENCE TO RELATED APPLICATIONS

The present disclosure claims the priority to Chinese Patent Application No. CN202210470226.2 entitled "MR-DC FULL CONFIGURATION METHOD AND APPARATUS, COMPUTER DEVICE, AND READABLE MEDIUM" and filed on April 28, 2022, the contents of which are incorporated herein by reference in their entirety.

### TECHNICAL FIELD

The present disclosure relates to the technical field of communications, and in particular, to an MR-DC full configuration method and apparatus, a computer device, and a readable medium.

### BACKGROUND

In a Standalone Access (SA) mobility scenario, a gNB Central Unit (gNB-CU) and a gNB Distributed Unit (gNB-DU) are supported to respectively trigger full configuration. If the gNB-CU decides to trigger full configuration, the gNB-CU informs the gNB-DU via an F1 interface; and if the gNB-CU does not decide to trigger full configuration, the gNB-DU can decide to trigger full configuration, and inform the gNB-CU via an F1 interface, so as to inform both a User Equipment (UE) and the gNB-CU to perform full configuration .

In a Multi-Radio Dual Connectivity (MR-DC) mobility scenario accompanied by a Secondary Node (SN) handover, when a target Master Node (MN)-CU does not decide to perform full configuration while a target MN-DU is desired to perform full configuration, the target MN-DU informs the target MN-CU via an F1 interface, and is desired to inform each of an UE, the target MN-CU, and a target SN to perform full configuration, but there is no means to inform the target SN to perform full configuration at present. In this case, if the mobility handover continues, a Packet Data Convergence Protocol (PDCP) sequence number of the UE is not consistent with that of the target SN, which causes a sudden drop in traffic and affects user traffic services. If the mobility handover fails, important indexes such as a handover success rate, an SN addition success rate, and a UE call drop rate are affected.

### SUMMARY

The present disclosure provides an MR-DC full configuration method and apparatus, a computer device, and a readable medium.

In a first aspect, an embodiment of the present disclosure provides an MR-DC full configuration method applied to a target master node-central unit (MN-CU), including:
in response to determining that a target master node-distributed unit (MN-DU) completes full configuration, sending an indication message to a target secondary node-central unit (SN-CU), with the indication message configured to instruct the target SN-CU to perform full configuration.

In some embodiments, sending the indication message to the target SN-CU includes: sending the indication message to the target SN-CU via an Xn interface.

In some embodiments, the indication message is a user-side Xn interface address indication message.

In another aspect, an embodiment of the present disclosure further provides an MR-DC full configuration method applied to a target SN-CU, including:
receiving an indication message sent by a target MN-CU, with the indication message configured to instruct the target SN-CU to perform full configuration; and
performing full configuration.

In some embodiments, after performing full configuration, the method further includes:
sending a user context modification request message to a target secondary node-distributed unit (SN-DU), with the user context modification request message configured to instruct the target SN-DU to perform full configuration; and
receiving a user context modification response message sent by the target SN-DU, with the user context modification response message sent by the target SN-DU after the target SN-DU completes full configuration.

In some embodiments, receiving the indication message sent by the target MN-CU includes:
receiving, via an Xn interface, the indication message sent by the target MN-CU.

In some embodiments, the indication message is a user-side Xn interface address indication message.

In still another aspect, an embodiment of the present disclosure further provides an MR-DC full configuration apparatus which is a target MN-CU, including a determination module and a full configuration indication module, and the determination module is configured to determine whether a target MN-DU completes full configuration; and
the full configuration indication module is configured to send, in response to a case where the determination module determines that the target MN-DU completes full configuration, an indication message to a target SN-CU, with the indication message configured to instruct the target SN-CU to perform full configuration.

In yet another aspect, an embodiment of the present disclosure further provides an MR-DC full configuration apparatus which is an SN-CU, including a first receiving module and a full configuration module, and the first receiving module is configured to receive an indication message sent by a target MN-CU, with the indication message configured to instruct the SN-CU to perform full configuration; and
the full configuration module is configured to perform full configuration.

In yet another aspect, an embodiment of the present disclosure further provides a computer device, including: one or more processors; and a storage device having one or more programs stored thereon; and when the one or more programs are executed by the one or more processors, the one or more processors are caused to implement the MR-DC full configuration method described above.

In yet another aspect, an embodiment of the present disclosure further provides a computer-readable medium having a computer program stored thereon, wherein, when being executed, the computer program implements the MR-DC full configuration method described above

The MR-DC full configuration method provided in the embodiments of the present disclosure is applied to the target MN-CU, including: in response to determining that the target MN-DU completes full configuration, sending the indication message to the target SN, with the indication message configured to instruct the target SN to perform full configuration. According to the embodiments of the present disclosure, after the target MN-DU completes full configuration, the target MN-CU instructs the target SN-CU to perform full configuration through the indication message, so as to enable the target SN-CU to instruct the target SN-DU to perform full configuration, thereby realizing full configuration of the target SN. According to the embodiments of the present disclosure, a deficiency of the standard protocols can be made up for, and when a mobility handover is carried out under MR-DC networking, each of a UE, an MN, and an SN is supported to perform full configuration, so that a probability of packet loss or UE release in a service process is reduced, and continuity of dual connectivity user services is improved.

### BRIEF DESCRIPTION OF DRAWINGS

In order to illustrate the technical solutions in the embodiments of the present disclosure or in the existing technology more clearly, drawings for the illustration of the embodiments or the existing technology will be briefly described below. Apparently, other drawings can be derived by those of ordinary skill in the art from the drawings described herein without any creative work.
FIG. 1 is a schematic diagram of an MR-DC networking architecture;
FIG. 2 is a flowchart illustrating an MR-DC full configuration method with an MN-CU as an execution body according to an embodiment of the present disclosure;
FIG. 3 is a first flowchart illustrating an MR-DC full configuration method with an SN-CU as an execution body according to an embodiment of the present disclosure;
FIG. 4 is a second flowchart illustrating an MR-DC full configuration method with an SN-CU as an execution body according to an embodiment of the present disclosure;
FIG. 5 to FIG. 14 are schematic diagrams illustrating MR-DC full configuration processes in ten exemplary examples according to the embodiments of the present disclosure;
FIG. 15 is a schematic structural diagram of an MR-DC full configuration apparatus (an MN-CU) according to an embodiment of the present disclosure;
FIG. 16 is a first schematic structural diagram of an MR-DC full configuration apparatus (an SN-CU) according to an embodiment of the present disclosure; and
FIG. 17 is a second schematic structural diagram of an MR-DC full configuration apparatus (an SN-CU) according to an embodiment of the present disclosure.

### DETAIL DESCRIPTION OF EMBODIMENTS

Exemplary embodiments will be described more fully below with reference to the drawings, but the exemplary embodiments may be embodied in different forms, and should not be interpreted as being limited to the embodiments described herein. Rather, the embodiments are provided to make the present disclosure thorough and complete, and are intended to enable those of ordinary skill in the art to fully understand the scope of the present disclosure.

The term "and/or" used herein includes any and all combinations of one or more associated listed items.

The terms used herein are merely used to describe specific embodiments, and are not intended to limit the present disclosure. As used herein, "a" and "the" which indicate a singular form are intended to include a plural form, unless expressly stated in the context. It should be further understood that the term(s) "include" and/or "be made of" used herein indicate(s) the presence of the described features, integers, operations, elements and/or components, but do not exclude the presence or addition of one or more other features, integers, operations, elements, components and/or combinations thereof.

The embodiments described herein can be described with reference to plans and/or cross-sectional views with the aid of idealized schematic diagrams of the present disclosure. Accordingly, the exemplary drawings may be modified according to manufacturing techniques and/or tolerances. Therefore, the embodiments are not limited to those illustrated by the drawings, but include modifications to configuration formed based on a manufacturing process. Thus, regions shown in the drawings are illustrative, and shapes of the regions shown in the drawings illustrate specific shapes of regions of elements, but are not intended to make limitations.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

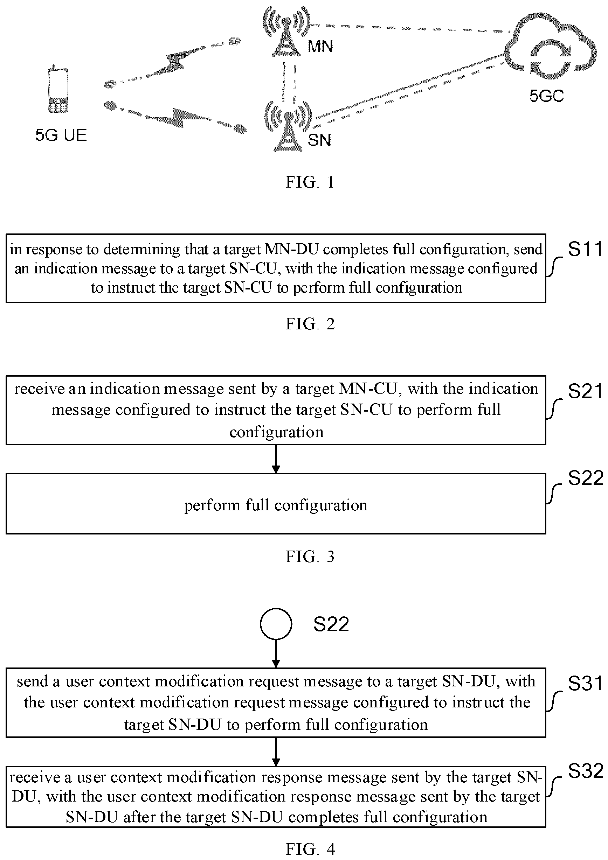

As shown in FIG. 1, in an MR-DC dual connectivity networking scenario, the dual connectivity technology makes full use of wireless air interface resources of different stations (in a same standard or in different standards) to improve a user experience rate. A 5G UE can be simultaneously connected to two base stations, i.e., an MN and an SN, so as to increase throughput of a single user. The MN and the SN may be two New Radio (NR) base stations or two ng-eNB/NR base stations.

A 5G core network may include three MR-DC scenarios as follows: NR-E-UTRA Dual Connectivity (NE-DC, dual connectivity of a 5G NR radio access network and a 4G radio access network), NG-RAN E-UTRA-NR Dual Connectivity (NGEN-DC, dual connectivity of a 4G radio access network under the 5G core network and a 5G NR radio access network), and NR-NR Dual Connectivity (NR-DC, dual connectivity of a 5G NR radio access network and a 5G NR radio access network). The embodiments of the present disclosure may be applied to the above three MR-DC scenarios.

An embodiment of the present disclosure provides an MR-DC full configuration method applied in a mobility handover scenario under MR-DC networking. All mobility handover scenarios in the embodiments of the present disclosure are MN handover scenarios accompanied by SN handovers, that is, not only does an MN handover need to be carried out, but also an SN handover needs to be carried out. In the embodiments of the present disclosure, source MNs (including a source MN-CU and a source MN-DU) and source SNs (including a source SN-CU and a source SN-DU) are MNs and SNs before the handovers, and target MNs (including a target MN-CU and a target MN-DU) and target SNs (including a target SN-CU and a target SN-DU) are MNs and SNs after the handovers.

MR-DC mobility handovers in the embodiments of the present disclosure may include: an MR-DC mobility Xn handover, an MR-DC mobility Ng handover, an MR-DC mobility intra-DU handover, an MR-DC mobility inter-DU handover, an MR-DC mobility inter-station conditional handover, and an MR-DC mobility intra-station conditional handover. It should be noted that all the above six MR-DC mobility handovers include a case where the source SNs are the same as the target SNs and a case where the source SNs are different from the target SNs. The MR-DC mobility Xn handover is an MN handover initiated by a source MN and based on an Xn interface, the MR-DC mobility Ng handover is an MN handover initiated by a source MN and based on an Ng interface, the MR-DC mobility intra-DU handover is an MN handover initiated by an MN-CU and performed in a DU, the MR-DC mobility inter-DU handover is an MN handover initiated by an MN-CU and performed between DUs, the MR-DC mobility inter-station conditional handover is an MN handover initiated by a source MN to a plurality of target base stations, and the MR-DC mobility intra-station conditional handover is an intra-station handover initiated by an MN to a plurality of cells in a station.

As shown in FIG. 2, an MR-DC full configuration method according to an embodiment of the present disclosure is applied to a target MN-CU, and includes:
operation S11, in response to determining that a target MN-DU completes full configuration, sending an indication message to a target SN-CU, with the indication message configured to instruct the target SN-CU to perform full configuration.

At this operation, in a case where the target MN-CU determines that the target MN-DU completes full configuration, the target MN-CU sends the indication message to the target SN-CU, and the target SN-CU may perform full configuration after receiving the indication message. It should be noted that, after completing full configuration, the target SN-CU further instructs a target SN-DU to perform full configuration.

The existing standard protocols do not define the target MN-CU instructing the target SN-CU to perform full configuration, such that traffic of services drops suddenly, which affects user traffic services or leads to a mobility handover failure. According to the embodiments of the present disclosure, after the target MN-DU completes full configuration, the target MN-CU instructs the target SN-CU to perform full configuration through the indication message, so as to enable the target SN-CU to instruct the target SN-DU to perform full configuration, thereby realizing full configuration of the target SNs and making up for the deficiency of the standard protocols. Thus, when a mobility handover is carried out under the MR-DC networking, each of a UE, an MN, and an SN is supported to perform full configuration, so that a probability of packet loss or UE release in a service process is reduced, and continuity of dual connectivity user services is improved.

It should be noted that a UE is also desired to perform full configuration in the MR-DC mobility scenarios. Therefore, after a target SN completes full configuration, a source MN sends Radio Resource Control Reconfiguration (RRC Reconfiguration) information, which is full configuration information of the target SN and full configuration information of a target MN, to the UE, so as to instruct the UE to perform full configuration according to the full configuration information of the target SN and the full configuration information of the target MN.

In some embodiments, sending the indication message to the target SN-CU includes: sending the indication message to the target SN-CU via an Xn interface. That is, at this operation, the indication message is transmitted between the target MN-CU and the target SN-CU via the Xn interface.

In some embodiments, the indication message is a user-side Xn interface address indication message. At this operation, the target MN-CU sends an Xn-U ADDRESS INDICATION message to the target SN-CU to instruct the target SN-CU to perform full configuration. The user-side Xn interface address indication message (Xn-U ADDRESS INDICATION) is a message defined by the existing standard protocols. In the embodiments of the present disclosure, a field may be added to the user-side Xn interface address indication message (Xn-U ADDRESS INDICATION) for instructing the target SN-CU to perform full configuration, so that the message is endowed with a function of instructing the target SN-CU to perform full configuration.

An embodiment of the present disclosure further provides an MR-DC full configuration method applied to a target SN-CU. As shown in FIG. 3, the method includes the following operations S21 and S22.

At operation S21, an indication message sent by a target MN-CU is received, with the indication message configured to instruct the target SN-CU to perform full configuration.

At this operation, the target SN-CU receives the indication message sent by the target MN-CU.

At operation S22, full configuration is performed.

At this operation, the target SN-CU performs full configuration locally according to the indication message.

After the target SN-CU completes full configuration, a target SN-DU is desired to perform full configuration. Therefore, in some embodiments, as shown in FIG. 4, after performing full configuration (i.e., operation S22), the MR-DC full configuration method further includes the following operations S31 and S32.

At operation S31, a user context modification request message is sent to a target SN-DU, with the user context modification request message configured to instruct the target SN-DU to perform full configuration.

At this operation, after the target SN-CU completes full configuration locally, the target SN-CU sends a UE CONTEXT MODIFICATION REQUEST message to the target SN-DU via an F1 interface to instruct the target SN-DU to perform full configuration.

At operation S32, a user context modification response message sent by the target SN-DU is received, with the user context modification response message sent by the target SN-DU after the target SN-DU completes full configuration.

At this operation, after the target SN-DU performs full configuration locally according to the UE CONTEXT MODIFICATION REQUEST message, the target SN-DU returns a UE CONTEXT MODIFICATION RESPONSE message to the target SN-CU via an F1 interface to inform the target SN-CU that the target SN-DU completes full configuration.

After full configuration of the target SN-CU and full configuration of the target SN-DU are respectively performed, full configuration of the target SNs is completed.

In some embodiments, receiving the indication message sent by the target MN-CU (i.e., operation S21) includes: receiving, via an Xn interface, the indication message sent by the target MN-CU. That is, at this operation, the indication message is transmitted between the target MN-CU and the target SN-CU via the Xn interface.

In some embodiments, the indication message is a user-side Xn interface address indication message. The target SN-CU receives an Xn-U ADDRESS INDICATION message sent by the target MN-CU, so that the target SN-CU may perform full configuration locally. The user-side Xn interface address indication message (Xn-U ADDRESS INDICATION) is a message defined by the existing standard protocols. In the embodiments of the present disclosure, a field may be added to the user-side Xn interface address indication message (Xn-U ADDRESS INDICATION) for instructing the target SN-CU to perform full configuration, so that the message is endowed with a function of instructing the target SN-CU to perform full configuration.

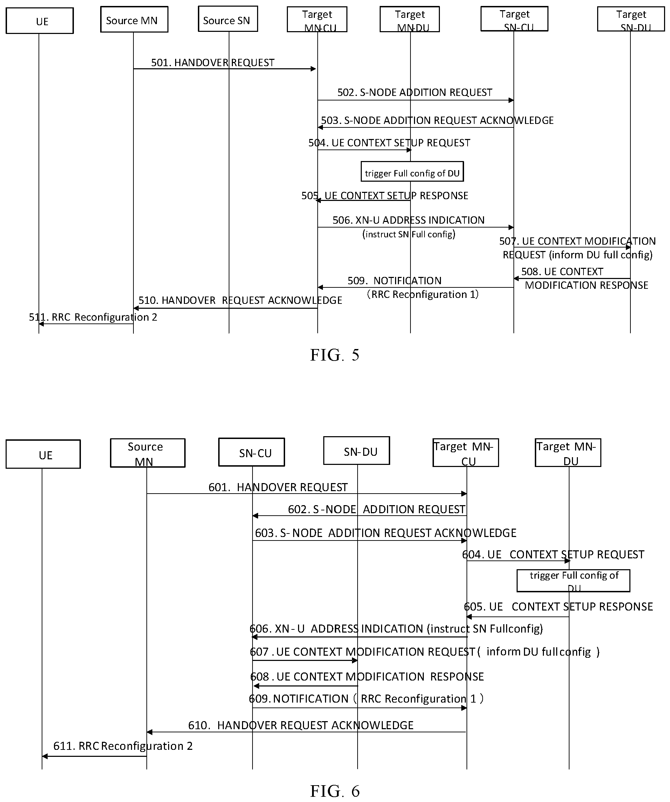

For clearly describing the technical solutions of the embodiments of the present disclosure, ten MR-DC mobility handover scenarios are described below with reference to FIG. 5 to FIG. 14, respectively.

### Example One: an MR-DC mobility Xn handover (SN changed) scenario

In this example, a UE is connected to a source MN, the source MN is handed over to a target MN based on an Xn interface, and a target SN selected by the target MN is different from a source SN. Full configuration procedures performed by the target MN, the target SN, and the UE are described by taking adding an SN to the target MN as an example, and as shown in FIG. 5, specific implementation operations are as follows.

At operation 501, in response to a case where the UE is connected to the source MN and the source SN is added, the source MN sends a handover request message (HANDOVER REQUEST) to a target MN-CU via the Xn interface to initiate an MR-DC mobility Xn handover.

At operation 502, the target MN-CU sends an SN addition request message (S-NODE ADDITION REQUEST) to a target SN-CU to initiate an SN addition procedure.

At operation 503, the target SN-CU returns an SN addition request acknowledge message (S-NODE ADDITION REQUEST ACKNOWLEDGE) to the target MN-CU.

At operation 504, the target MN-CU sends a user context setup request message (UE CONTEXT SETUP REQUEST) to a target MN-DU via an F1 interface to initiate a context setup procedure.

At operation 505, the target MN-DU performs full configuration, and sends a user context setup response message (UE CONTEXT SETUP RESPONSE) to the target MN-CU to inform the target MN-CU that the target MN-DU completes full configuration.

At operation 506, the target MN-CU sends a user-side Xn interface address indication message (Xn-U ADDRESS INDICATION) to the target SN-CU to instruct the target SN-CU to perform full configuration.

At operation 507, the target SN-CU performs full configuration, and sends a UE context modification request message (UE CONTEXT MODIFICATION REQUEST) to a target SN-DU via an F1 interface to instruct the target SN-DU to perform full configuration.

At operation 508, the target SN-DU performs full configuration, and returns a user context modification response message (UE CONTEXT MODIFICATION RESPONSE) to the target SN-CU via an F1 interface.

At operation 509, the target SN-CU sends a notification message (NOTIFICATION) carrying first RRC Reconfiguration information (RRC Reconfiguration 1) to the target MN-CU, with the first RRC Reconfiguration information being full configuration information of the target SN.

At operation 510, the target MN-CU sends a handover request acknowledge message (HANDOVER REQUEST ACKNOWLEDGE) to the source MN.

At operation 511, the source MN sends second RRC Reconfiguration information (RRC Reconfiguration 2) to the UE to instruct the UE to perform full configuration, with the second RRC Reconfiguration information being the full configuration information of the target SN and full configuration information of the target MN.

In the MR-DC mobility Xn handover (SN changed) scenario, the source SN is different from the target SN; and after the target MN-DU performs full configuration, the target MN-CU instructs the target SN-CU to perform full configuration via the Xn interface, and the target SN-CU instructs the target SN-DU to perform full configuration, thereby ensuring that each of the UE, the target MN, and the target SN performs full configuration, and improving user experience.

### Example Two: an MR-DC mobility Xn handover (SN unchanged) scenario

In this example, a UE is connected to a source MN, the source MN is handed over to a target MN based on an Xn interface, and a target SN selected by the target MN is the same as a source SN. Full configuration procedures performed by the target MN, the target SN, and the UE are described by taking adding an SN to the target MN as an example, and as shown in FIG. 6, specific implementation operations are as follows.

At operation 601, in response to a case where the UE is connected to the source MN and the SN is added, the source MN sends a handover request message (HANDOVER REQUEST) to a target MN-CU via the Xn interface to initiate an MR-DC mobility Xn handover.

At operation 602, the target MN-CU sends an SN addition request message (S-NODE ADDITION REQUEST) to an SN-CU to initiate an SN addition procedure. In this example, the target SN selected by the target MN is the same as the source SN, so a target SN-CU is the same as a source SN-CU (referred to as an SN-CU), and a target SN-DU is the same as a source SN-DU (referred to as an SN-DU).

At operation 603, the SN-CU returns an SN addition request acknowledge message (S-NODE ADDITION REQUEST ACKNOWLEDGE) to the target MN-CU.

At operation 604, the target MN-CU sends a user context setup request message (UE CONTEXT SETUP REQUEST) to a target MN-DU via an F1 interface to initiate a context setup procedure.

At operation 605, the target MN-DU performs full configuration, and sends a user context setup response message (UE CONTEXT SETUP RESPONSE) to the target MN-CU to inform the target MN-CU that the target MN-DU completes full configuration.

At operation 606, the target MN-CU sends a user-side Xn interface address indication message (Xn-U ADDRESS INDICATION) to the SN-CU to instruct the SN-CU to perform full configuration.

At operation 607, the SN-CU performs full configuration, and sends a UE context modification request message (UE CONTEXT MODIFICATION REQUEST) to an SN-DU via an F1 interface to instruct the SN-DU to perform full configuration.

At operation 608, the SN-DU performs full configuration, and returns a user context modification response message (UE CONTEXT MODIFICATION RESPONSE) to the SN-CU via an F1 interface.

At operation 609, the SN-CU sends a notification message (NOTIFICATION) carrying first RRC Reconfiguration information (RRC Reconfiguration 1) to the target MN-CU, with the first RRC Reconfiguration information being full configuration information of the SN.

At operation 610, the target MN-CU sends a handover request acknowledge message (HANDOVER REQUEST ACKNOWLEDGE) to the source MN.

At operation 611, the source MN sends second RRC Reconfiguration information (RRC Reconfiguration 2) to the UE to instruct the UE to perform full configuration, with the second RRC Reconfiguration information being the full configuration information of the SN and full configuration information of the target MN.

In the MR-DC mobility Xn handover (SN unchanged) scenario, the source SN is the same as the target SN; and after the target MN-DU performs full configuration, the target MN-CU instructs the SN-CU to perform full configuration via the Xn interface, and the SN-CU instructs the SN-DU to perform full configuration, thereby ensuring that each of the UE, the target MN, and the SN performs full configuration, and improving user experience.

### Example Three: an MR-DC mobility Ng handover (SN unchanged) scenario

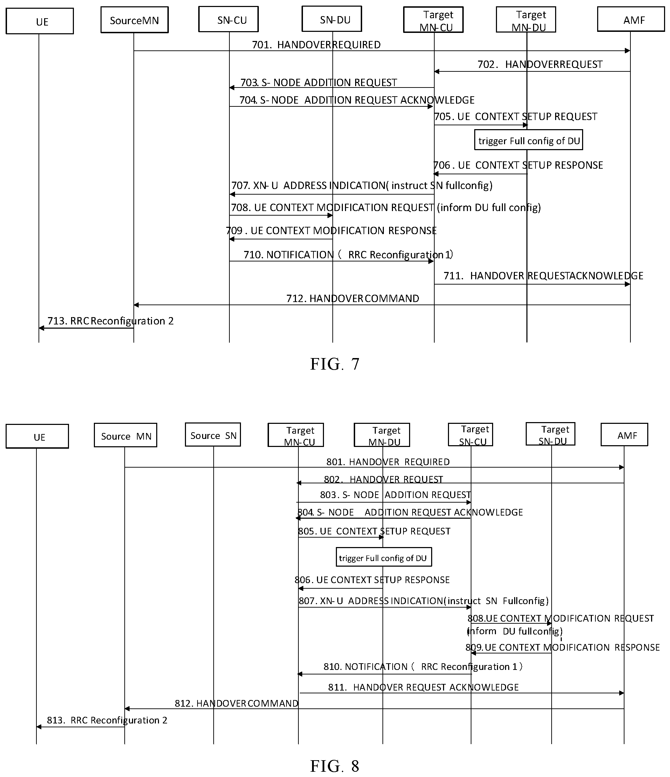

In this example, a UE is connected to a source MN, the source MN is handed over to a target MN based on an Ng interface, and a target SN selected by the target MN is the same as a source SN. Full configuration procedures performed by the target MN, the target SN, and the UE are described by taking adding an SN to the target MN as an example, and as shown in FIG. 7, specific implementation operations are as follows.

At operation 701, in response to a case where the UE is connected to the source MN and the SN is added, the source MN sends a handover request message (HANDOVER REQUEST) to an Authentication Management Function (AMF) via the Ng interface to initiate an MR-DC mobility Ng handover.

At operation 702, the AMF forwards the handover request message (HANDOVER REQUEST) to a target MN-CU.

At operation 703, the target MN-CU sends an SN addition request message (S-NODE ADDITION REQUEST) to an SN-CU to initiate an SN addition procedure. In this example, the target SN selected by the target MN is the same as the source SN, so a target SN-CU is the same as a source SN-CU (referred to as an SN-CU), and a target SN-DU is the same as a source SN-DU (referred to as an SN-DU).

At operation 704, the SN-CU returns an SN addition request acknowledge message (S-NODE ADDITION REQUEST ACKNOWLEDGE) to the target MN-CU.

At operation 705, the target MN-CU sends a user context setup request message (UE CONTEXT SETUP REQUEST) to a target MN-DU via an F1 interface to initiate a context setup procedure.

At operation 706, the target MN-DU performs full configuration, and sends a user context setup response message (UE CONTEXT SETUP RESPONSE) to the target MN-CU to inform the target MN-CU that the target MN-DU completes full configuration.

At operation 707, the target MN-CU sends a user-side Xn interface address indication message (Xn-U ADDRESS INDICATION) to the SN-CU to instruct the SN-CU to perform full configuration.

At operation 708, the SN-CU performs full configuration, and sends a UE context modification request message (UE CONTEXT MODIFICATION REQUEST) to an SN-DU via an F1 interface to instruct the SN-DU to perform full configuration.

At operation 709, the SN-DU performs full configuration, and returns a user context modification response message (UE CONTEXT MODIFICATION RESPONSE) to the SN-CU via an F1 interface.

At operation 710, the SN-CU sends a notification message (NOTIFICATION) carrying first RRC Reconfiguration information (RRC Reconfiguration 1) to the target MN-CU, with the first RRC Reconfiguration information being full configuration information of the SN.

At operation 711, the target MN-CU returns a handover request acknowledge message (HANDOVER REQUEST ACKNOWLEDGE) to the AMF.

At operation 712, the AMF sends a handover command (HANDOVER COMMAND) to the source MN.

At operation 713, the source MN sends second RRC Reconfiguration information (RRC Reconfiguration 2) to the UE to instruct the UE to perform full configuration, with the second RRC Reconfiguration information being the full configuration information of the SN and full configuration information of the target MN.

In the MR-DC mobility Ng handover (SN unchanged) scenario, the source SN is the same as the target SN; and after the target MN-DU performs full configuration, the target MN-CU instructs the SN-CU to perform full configuration via an Xn interface, and the SN-CU instructs the SN-DU to perform full configuration, thereby ensuring that each of the UE, the target MN, and the SN performs full configuration, and improving user experience.

### Example Four: an MR-DC mobility Ng handover (SN changed) scenario

In this example, a UE is connected to a source MN, the source MN is handed over to a target MN based on an Ng interface, and a target SN selected by the target MN is different from a source SN. Full configuration procedures performed by the target MN, the target SN, and the UE are described by taking adding an SN to the target MN as an example, and as shown in FIG. 8, specific implementation operations are as follows.

At operation 801, in response to a case where the UE is connected to the source MN and the source SN is added, the source MN sends a handover request message (HANDOVER REQUEST) to an AMF via the Ng interface to initiate an MR-DC mobility Ng handover.

At operation 802, the AMF forwards the handover request message (HANDOVER REQUEST) to a target MN-CU.

At operation 803, the target MN-CU sends an SN addition request message (S-NODE ADDITION REQUEST) to a target SN-CU to initiate an SN addition procedure.

At operation 804, the target SN-CU returns an SN addition request acknowledge message (S-NODE ADDITION REQUEST ACKNOWLEDGE) to the target MN-CU.

At operation 805, the target MN-CU sends a user context setup request message (UE CONTEXT SETUP REQUEST) to a target MN-DU via an F1 interface to initiate a context setup procedure.

At operation 806, the target MN-DU performs full configuration, and sends a user context setup response message (UE CONTEXT SETUP RESPONSE) to the target MN-CU to inform the target MN-CU that the target MN-DU completes full configuration.

At operation 807, the target MN-CU sends a user-side Xn interface address indication message (Xn-U ADDRESS INDICATION) to the target SN-CU to instruct the target SN-CU to perform full configuration.

At operation 808, the target SN-CU performs full configuration, and sends a UE context modification request message (UE CONTEXT MODIFICATION REQUEST) to a target SN-DU via an F1 interface to instruct the target SN-DU to perform full configuration.

At operation 809, the target SN-DU performs full configuration, and returns a user context modification response message (UE CONTEXT MODIFICATION RESPONSE) to the target SN-CU via an F1 interface.

At operation 810, the target SN-CU sends a notification message (NOTIFICATION) carrying first RRC Reconfiguration information (RRC Reconfiguration 1) to the target MN-CU, with the first RRC Reconfiguration information being full configuration information of the target SN.

At operation 811, the target MN-CU returns a handover request acknowledge message (HANDOVER REQUEST ACKNOWLEDGE) to the AMF.

At operation 812, the AMF sends a handover command (HANDOVER COMMAND) to the source MN.

At operation 813, the source MN sends second RRC Reconfiguration information (RRC Reconfiguration 2) to the UE to instruct the UE to perform full configuration, with the second RRC Reconfiguration information being the full configuration information of the target SN and full configuration information of the target MN.

In the MR-DC mobility Ng handover (SN changed) scenario, the source SN is different from the target SN; and after the target MN-DU performs full configuration, the target MN-CU instructs the target SN-CU to perform full configuration via an Xn interface, and the target SN-CU instructs the target SN-DU to perform full configuration, thereby ensuring that each of the UE, the target MN, and the target SN performs full configuration, and improving user experience.

### Example Five: an MR-DC mobility intra-DU handover (SN unchanged) scenario

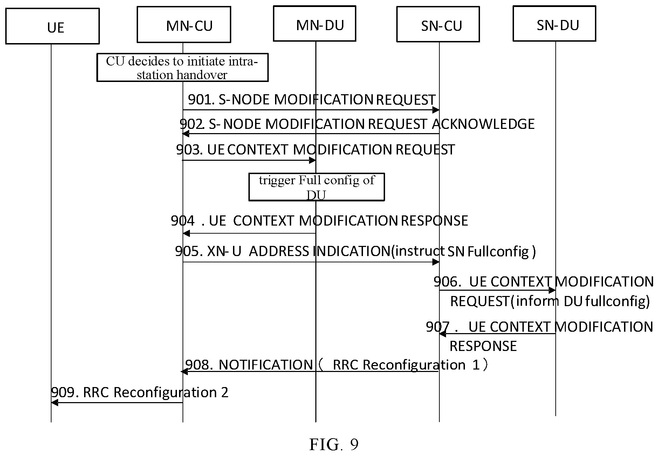

In this example, a UE is connected to an MN, an intra-DU handover occurs in the MN, and a target SN selected by a target MN is the same as a source SN. By taking adding an SN to a target cell as an example, full configuration procedures performed by the MN, the SN, and the UE are described. It should be noted that the MR-DC mobility intra-DU handover includes an intra-station intra-CU handover and an inter-CU cell handover, and a description is given in this example by taking the intra-station intra-CU handover as an example. As shown in FIG. 9, specific implementation operations are as follows.

At operation 901, in response to a case where the UE is connected to the MN and the SN is added, in a case where an MN-CU decides to initiate an intra-station intra-DU handover, the MN-CU sends an SN modification request message (S-NODE MODIFICATION REQUEST) to an SN-CU to initiate an SN modification procedure. In this example, the target SN selected by the target MN is the same as the source SN, so a target SN-CU is the same as a source SN-CU (referred to as an SN-CU), and a target SN-DU is the same as a source SN-DU (referred to as an SN-DU).

At operation 902, the SN-CU returns an SN modification request acknowledge message (S-NODE MODIFICATION REQUEST ACKNOWLEDGE) to the MN-CU.

At operation 903, the MN-CU sends a user context modification request message (UE CONTEXT MODIFICATION REQUEST) to an MN-DU via an F1 interface to initiate a context modification procedure.

At operation 904, the MN-DU performs full configuration, and sends a user context modification response message (UE CONTEXT MODIFICATION RESPONSE) to the MN-CU to inform the MN-CU that the MN-DU completes full configuration.

At operation 905, the MN-CU sends a user-side Xn interface address indication message (Xn-U ADDRESS INDICATION) to the SN-CU to instruct the SN-CU to perform full configuration.

At operation 906, the SN-CU performs full configuration, and sends a UE context modification request message (UE CONTEXT MODIFICATION REQUEST) to an SN-DU via an F1 interface to instruct the SN-DU to perform full configuration.

At operation 907, the SN-DU performs full configuration, and returns a user context modification response message (UE CONTEXT MODIFICATION RESPONSE) to the SN-CU via an F1 interface.

At operation 908, the SN-CU sends a notification message (NOTIFICATION) carrying first RRC Reconfiguration information (RRC Reconfiguration 1) to the MN-CU, with the first RRC Reconfiguration information being full configuration information of the SN.

At operation 909, the MN-CU sends second RRC Reconfiguration information (RRC Reconfiguration 2) to the UE to instruct the UE to perform full configuration, with the second RRC Reconfiguration information being the full configuration information of the SN and full configuration information of the target MN.

In the MR-DC mobility intra-DU handover (SN unchanged) scenario, the source SN is the same as the target SN; and after the MN-DU performs full configuration, the MN-CU instructs the SN-CU to perform full configuration via an Xn interface, and the SN-CU instructs the SN-DU to perform full configuration, thereby ensuring that each of the UE, the MN, and the SN performs full configuration, and improving user experience.

### Example Six: an MR-DC mobility intra-DU handover (SN changed) scenario

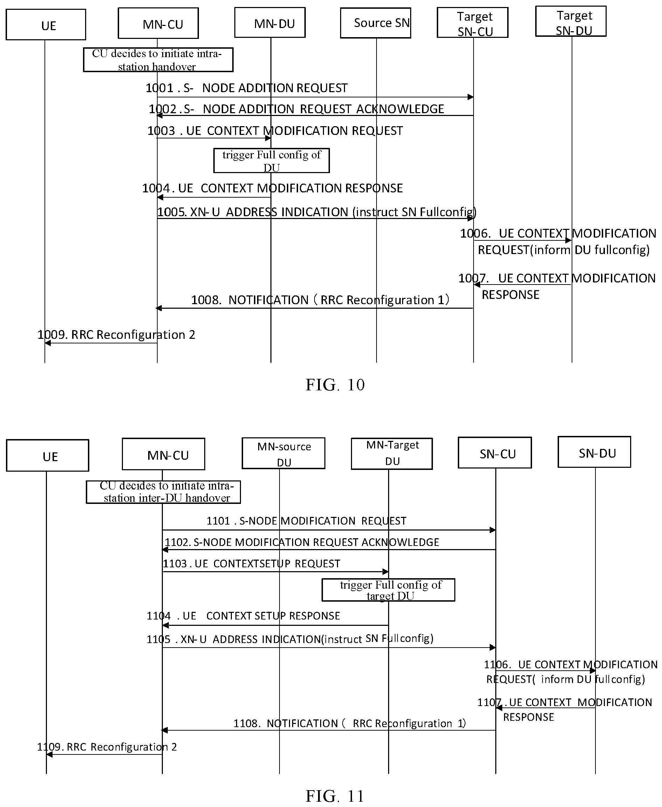

In this example, a UE is connected to an MN, an intra-DU handover occurs in the MN, and a target SN selected by a target MN is different from a source SN. By taking adding an SN to a target cell as an example, full configuration procedures performed by the MN, the SN, and the UE are described. It should be noted that the MR-DC mobility intra-DU handover includes an intra-station intra-CU handover and an inter-CU cell handover, and a description is given in this example by taking the intra-station intra-CU handover as an example. As shown in FIG. 10, specific implementation operations are as follows.

At operation 1001, in response to a case where the UE is connected to the MN and the source SN is added, in a case where an MN-CU decides to initiate an intra-station intra-DU handover, the MN-CU sends an SN addition request message (S-NODE ADDITION REQUEST) to a target SN-CU to initiate an SN addition procedure.

At operation 1002, the target SN-CU returns an SN addition request acknowledge message (S-NODE ADDITION REQUEST ACKNOWLEDGE) to the MN-CU.

At operation 1003, the MN-CU sends a user context modification request message (UE CONTEXT MODIFICATION REQUEST) to an MN-DU via an F1 interface to initiate a context modification procedure.

At operation 1004, the MN-DU performs full configuration, and sends a user context modification response message (UE CONTEXT MODIFICATION RESPONSE) to the MN-CU to inform the MN-CU that the MN-DU completes full configuration.

At operation 1005, the MN-CU sends a user-side Xn interface address indication message (Xn-U ADDRESS INDICATION) to the target SN-CU to instruct the target SN-CU to perform full configuration.

At operation 1006, the target SN-CU performs full configuration, and sends a UE context modification request message (UE CONTEXT MODIFICATION REQUEST) to a target SN-DU via an F1 interface to instruct the target SN-DU to perform full configuration.

At operation 1007, the target SN-DU performs full configuration, and returns a user context modification response message (UE CONTEXT MODIFICATION RESPONSE) to the target SN-CU via an F1 interface.

At operation 1008, the target SN-CU sends a notification message (NOTIFICATION) carrying first RRC Reconfiguration information (RRC Reconfiguration 1) to the MN-CU, with the first RRC Reconfiguration information being full configuration information of the target SN.

At operation 1009, the MN-CU sends second RRC Reconfiguration information (RRC Reconfiguration 2) to the UE to instruct the UE to perform full configuration, with the second RRC Reconfiguration information being the full configuration information of the target SN and full configuration information of the target MN.

In the MR-DC mobility intra-DU handover (SN changed) scenario, the source SN is different from the target SN; and after the MN-DU performs full configuration, the MN-CU instructs the target SN-CU to perform full configuration via an Xn interface, and the target SN-CU instructs the target SN-DU to perform full configuration, thereby ensuring that each of the UE, the MN, and the target SN performs full configuration, and improving user experience.

### Example Seven: an MR-DC mobility inter-DU handover (SN unchanged) scenario

In this example, a UE is connected to an MN, an inter-DU handover occurs in the MN, and a target SN selected by a target cell is the same as a source SN. By taking adding an SN to the target cell as an example, full configuration procedures performed by the MN, the SN, and the UE are described. It should be noted that the MR-DC mobility inter-DU handover includes an intra-station intra-CU handover and an inter-CU cell handover, and a description is given in this example by taking the intra-station intra-CU handover as an example. As shown in FIG. 11, specific implementation operations are as follows.

At operation 1101, in response to a case where the UE is connected to the MN and the SN is added, in a case where an MN-CU decides to initiate an intra-station inter-DU handover, the MN-CU sends an SN modification request message (S-NODE MODIFICATION REQUEST) to an SN-CU to initiate an SN modification procedure. In this example, the target SN selected by a target MN is the same as the source SN, so a target SN-CU is the same as a source SN-CU (referred to as an SN-CU), and a target SN-DU is the same as a source SN-DU (referred to as an SN-DU).

At operation 1102, the SN-CU returns an SN modification request acknowledge message (S-NODE MODIFICATION REQUEST ACKNOWLEDGE) to the MN-CU.

At operation 1103, the MN-CU sends a user context setup request message (UE CONTEXT SETUP REQUEST) to an intra-station target MN-DU via an F1 interface to initiate a context modification procedure.

At operation 1104, the intra-station target MN-DU (i.e., an MN-target DU) performs full configuration, and sends a user context setup response message (UE CONTEXT SETUP RESPONSE) to the MN-CU to inform the MN-CU that the intra-station target MN-DU completes full configuration.

At operation 1105, the MN-CU sends a user-side Xn interface address indication message (Xn-U ADDRESS INDICATION) to the SN-CU to instruct the SN-CU to perform full configuration.

At operation 1106, the SN-CU performs full configuration, and sends a UE context modification request message (UE CONTEXT MODIFICATION REQUEST) to an SN-DU via an F1 interface to instruct the SN-DU to perform full configuration.

At operation 1107, the SN-DU performs full configuration, and returns a user context modification response message (UE CONTEXT MODIFICATION RESPONSE) to the SN-CU via an F1 interface.

At operation 1108, the SN-CU sends a notification message (NOTIFICATION) carrying first RRC Reconfiguration information (RRC Reconfiguration 1) to the MN-CU, with the first RRC Reconfiguration information being full configuration information of the SN.

At operation 1109, the MN-CU sends second RRC Reconfiguration information (RRC Reconfiguration 2) to the UE to instruct the UE to perform full configuration, with the second RRC Reconfiguration information being the full configuration information of the SN and full configuration information of the target MN.

In the MR-DC mobility inter-DU handover (SN unchanged) scenario, the source SN is the same as the target SN; and after the intra-station target MN-DU performs full configuration, the MN-CU instructs the SN-CU to perform full configuration via an Xn interface, and the SN-CU instructs the SN-DU to perform full configuration, thereby ensuring that each of the UE, the target MN, and the SN performs full configuration, and improving user experience.

### Example Eight: an MR-DC mobility inter-DU handover (SN changed) scenario

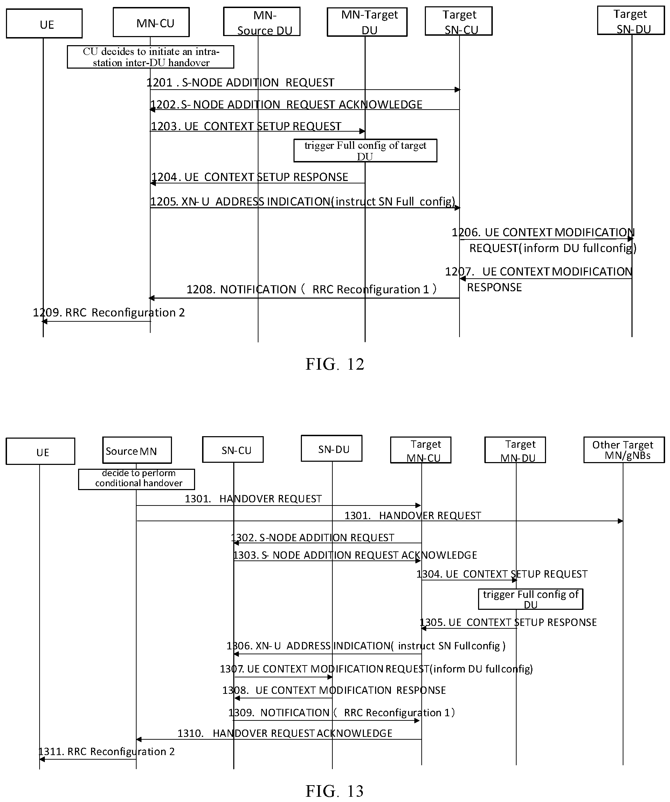

In this example, a UE is connected to an MN, an inter-DU handover occurs in the MN, and a target SN selected by a target cell is different from a source SN. By taking adding an SN to the target cell as an example, full configuration procedures performed by the MN, the SN, and the UE are described. It should be noted that the MR-DC mobility inter-DU handover includes an intra-station intra-CU handover and an inter-CU cell handover, and a description is given in this example by taking the intra-station intra-CU handover as an example. As shown in FIG. 12, specific implementation operations are as follows.

At operation 1201, in response to a case where the UE is connected to the MN and the source SN is added, in a case where an MN-CU decides to initiate an intra-station inter-DU handover, the MN-CU sends an SN addition request message (S-NODE ADDITION REQUEST) to a target SN-CU to initiate an SN addition procedure.

At operation 1202, the target SN-CU returns an SN addition request acknowledge message (S-NODE ADDITION REQUEST ACKNOWLEDGE) to the MN-CU.

At operation 1203, the MN-CU sends a user context setup request message (UE CONTEXT SETUP REQUEST) to an intra-station target MN-DU via an F1 interface to initiate a context modification procedure.

At operation 1204, the intra-station target MN-DU (i.e., an MN-target DU) performs full configuration, and sends a user context setup response message (UE CONTEXT SETUP RESPONSE) to the MN-CU to inform the MN-CU that the intra-station target MN-DU completes full configuration.

At operation 1205, the MN-CU sends a user-side Xn interface address indication message (Xn-U ADDRESS INDICATION) to the target SN-CU to instruct the target SN-CU to perform full configuration.

At operation 1206, the target SN-CU performs full configuration, and sends a UE context modification request message (UE CONTEXT MODIFICATION REQUEST) to a target SN-DU via an F1 interface to instruct the target SN-DU to perform full configuration.

At operation 1207, the target SN-DU performs full configuration, and returns a user context modification response message (UE CONTEXT MODIFICATION RESPONSE) to the target SN-CU via an F1 interface.

At operation 1208, the target SN-CU sends a notification message (NOTIFICATION) carrying first RRC Reconfiguration information (RRC Reconfiguration 1) to the MN-CU, with the first RRC Reconfiguration information being full configuration information of the target SN.

At operation 1209, the MN-CU sends second RRC Reconfiguration information (RRC Reconfiguration 2) to the UE to instruct the UE to perform full configuration, with the second RRC Reconfiguration information being the full configuration information of the target SN and full configuration information of the target MN.

In the MR-DC mobility inter-DU handover (SN changed) scenario, the source SN is different from the target SN; and after the intra-station target MN-DU performs full configuration, the MN-CU instructs the target SN-CU to perform full configuration via an Xn interface, and the target SN-CU instructs the target SN-DU to perform full configuration, thereby ensuring that each of the UE, the target MN, and the target SN performs full configuration, and improving user experience.

### Example Nine: an MR-DC mobility inter-station conditional handover (SN unchanged) scenario

In this example, a UE is connected to a source MN, the source MN decides to perform a conditional handover and is handed over to a target MN based on an Xn interface, the source MN sends a handover request to MNs of a plurality of target cells, and a target SN selected by the MN of one of the target cells is the same as a source SN. It should be noted that the MR-DC mobility inter-station conditional handover includes all conditional handover scenarios within a station and between stations, and a description is given in this example by taking an Xn handover as an example. By taking adding an SN to the target MN as an example, full configuration procedures performed by the target MN, the SN, and the UE are described, and as shown in FIG. 13, specific implementation operations are as follows.

At operation 1301, in response to a case where the UE is connected to the source MN and the SN is added, in a case where the source MN decides to perform a conditional handover, the source MN sends a handover request message (HANDOVER REQUEST) to a plurality of target MN-CUs respectively via an Xn interface to initiate an MR-DC mobility Xn handover.

At operation 1302, one of the target MN-CUs sends an SN addition request message (S-NODE ADDITION REQUEST) to an SN-CU to initiate an SN addition procedure. In this example, the target SN selected by the target cell is the same as the source SN, so a target SN-CU is the same as a source SN-CU (referred to as an SN-CU), and a target SN-DU is the same as a source SN-DU (referred to as an SN-DU).

At operation 1303, the SN-CU returns an SN addition request acknowledge message (S-NODE ADDITION REQUEST ACKNOWLEDGE) to the target MN-CU.

At operation 1304, the target MN-CU sends a user context setup request message (UE CONTEXT SETUP REQUEST) to a target MN-DU via an F1 interface to initiate a context setup procedure.

At operation 1305, the target MN-DU performs full configuration, and sends a user context setup response message (UE CONTEXT SETUP RESPONSE) to the target MN-CU to inform the target MN-CU that the target MN-DU completes full configuration.

At operation 1306, the target MN-CU sends a user-side Xn interface address indication message (Xn-U ADDRESS INDICATION) to the SN-CU to instruct the SN-CU to perform full configuration.

At operation 1307, the SN-CU performs full configuration, and sends a UE context modification request message (UE CONTEXT MODIFICATION REQUEST) to an SN-DU via an F1 interface to instruct the SN-DU to perform full configuration.

At operation 1308, the SN-DU performs full configuration, and returns a user context modification response message (UE CONTEXT MODIFICATION RESPONSE) to the SN-CU via an F1 interface.

At operation 1309, the SN-CU sends a notification message (NOTIFICATION) carrying first RRC Reconfiguration information (RRC Reconfiguration 1) to the target MN-CU, with the first RRC Reconfiguration information being full configuration information of the SN.

At operation 1310, the target MN-CU sends a handover request acknowledge message (HANDOVER REQUEST ACKNOWLEDGE) to the source MN.

At operation 1311, the source MN sends second RRC Reconfiguration information (RRC Reconfiguration 2) to the UE to instruct the UE to perform full configuration, with the second RRC Reconfiguration information being the full configuration information of the SN and full configuration information of the target MN.

In the MR-DC mobility inter-station conditional handover (SN unchanged) scenario, the source SN is the same as the target SN; and after the target MN-DU performs full configuration, the target MN-CU instructs the SN-CU to perform full configuration via the Xn interface, and the SN-CU instructs the SN-DU to perform full configuration, thereby ensuring that each of the UE, the target MN, and the SN performs full configuration, and improving user experience.

### Example Ten: an MR-DC mobility inter-station conditional handover (SN changed) scenario

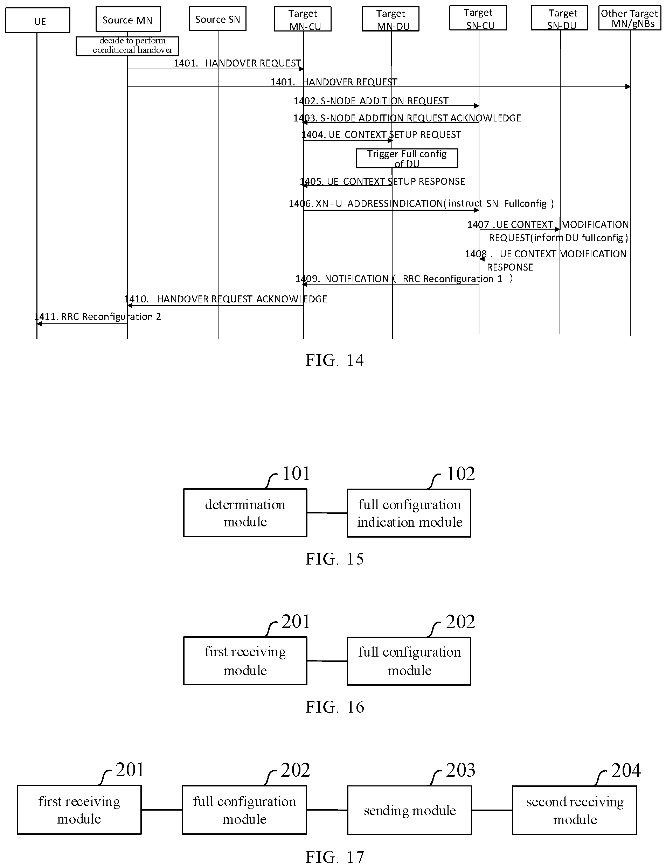

In this example, a UE is connected to a source MN, the source MN decides to perform a conditional handover and is handed over to a target MN based on an Xn interface, the source MN sends a handover request to MNs of a plurality of target cells, and a target SN selected by the MN of one of the target cells is different from a source SN. It should be noted that the MR-DC mobility inter-station conditional handover includes all conditional handover scenarios within a station and between stations, and a description is given in this example by taking an Xn handover as an example. By taking adding an SN to the target MN as an example, full configuration procedures performed by the target MN, the SN, and the UE are described, and as shown in FIG. 14, specific implementation operations are as follows.

At operation 1401, in response to a case where the UE is connected to the source MN and the source SN is added, in a case where the source MN decides to perform a conditional handover, the source MN sends a handover request message (HANDOVER REQUEST) to a plurality of target MN-CUs respectively via an Xn interface to initiate an MR-DC mobility Xn handover.

At operation 1402, one of the target MN-CUs sends an SN addition request message (S-NODE ADDITION REQUEST) to a target SN-CU to initiate an SN addition procedure. In this example, the target SN selected by the target cell is the same as the source SN, so a target SN-CU is the same as a source SN-CU (referred to as an SN-CU), and a target SN-DU is the same as a source SN-DU (referred to as an SN-DU).

At operation 1403, the target SN-CU returns an SN addition request acknowledge message (S-NODE ADDITION REQUEST ACKNOWLEDGE) to the target MN-CU.

At operation 1404, the target MN-CU sends a user context setup request message (UE CONTEXT SETUP REQUEST) to a target MN-DU via an F1 interface to initiate a context setup procedure.

At operation 1405, the target MN-DU performs full configuration, and sends a user context setup response message (UE CONTEXT SETUP RESPONSE) to the target MN-CU to inform the target MN-CU that the target MN-DU completes full configuration.

At operation 1406, the target MN-CU sends a user-side Xn interface address indication message (Xn-U ADDRESS INDICATION) to the target SN-CU to instruct the target SN-CU to perform full configuration.

At operation 1407, the target SN-CU performs full configuration, and sends a UE context modification request message (UE CONTEXT MODIFICATION REQUEST) to a target SN-DU via an F1 interface to instruct the target SN-DU to perform full configuration.

At operation 1408, the target SN-DU performs full configuration, and returns a user context modification response message (UE CONTEXT MODIFICATION RESPONSE) to the target SN-CU via an F1 interface.

At operation 1409, the target SN-CU sends a notification message (NOTIFICATION) carrying first RRC Reconfiguration information (RRC Reconfiguration 1) to the target MN-CU, with the first RRC Reconfiguration information being full configuration information of the target SN.

At operation 1410, the target MN-CU sends a handover request acknowledge message (HANDOVER REQUEST ACKNOWLEDGE) to the source MN.

At operation 1411, the source MN sends second RRC Reconfiguration information (RRC Reconfiguration 2) to the UE to instruct the UE to perform full configuration, with the second RRC Reconfiguration information being the full configuration information of the target SN and full configuration information of the target MN.

In the MR-DC mobility inter-station conditional handover (SN changed) scenario, the source SN is different from the target SN; and after the target MN-DU performs full configuration, the target MN-CU instructs the target SN-CU to perform full configuration via the Xn interface, and the target SN-CU instructs the target SN-DU to perform full configuration, thereby ensuring that each of the UE, the target MN, and the target SN performs full configuration, and improving user experience.

According to the embodiments of the present disclosure, for the MR-DC mobility scenarios, when the MN-DU triggers full configuration, the MN-DU can instruct the SN to perform full configuration through the field of the Xn interface, so that pack loss, which is caused when full configuration is performed at the MN side and the UE side but is not performed at the SN side, can be avoided, thereby preventing traffic interruption.

The MR-DC full configuration method according to the embodiments of the present disclosure is applied to the MR-DC mobility scenarios, and can solve the problem of a sudden drop in traffic or a handover failure by adding the field to the protocols to instruct the target SN to perform full configuration.

Based on the same technical concept, an embodiment of the present disclosure further provides an MR-DC full configuration apparatus, which is a target MN-CU. As shown in FIG. 15, the MN-CU includes a determination module 101 and a full configuration indication module 102, and the determination module 101 is configured to determine whether a target MN-DU completes full configuration.

The full configuration indication module 102 is configured to send, in response to a case where the determination module determines that the target MN-DU completes full configuration, an indication message to a target SN-CU, with the indication message configured to instruct the target SN-CU to perform full configuration

In some embodiments, the full configuration indication module 102 is configured to send the indication message to the target SN-CU via an Xn interface.

In some embodiments, the indication message is a user-side Xn interface address indication message.

Based on the same technical concept, an embodiment of the present disclosure further provides an MR-DC full configuration apparatus, which is an SN-CU. As shown in FIG. 16, the SN-CU includes a first receiving module 201 and a full configuration module 202, and the first receiving module 201 is configured to receive an indication message sent by a target MN-CU, with the indication message configured to instruct the SN-CU to perform full configuration.

The full configuration module 202 is configured to perform full configuration.

In some embodiments, as shown in FIG. 17, the SN-CU further includes a sending module 203 and a second receiving module 204, and the sending module 203 is configured to send a user context modification request message to a target SN-DU after the full configuration module 202 performs full configuration, with the user context modification request message configured to instruct the target SN-DU to perform full configuration.

The second receiving module 204 is configured to receive a user context modification response message sent by the target SN-DU, with the user context modification response message sent by the target SN-DU after the target SN-DU completes full configuration.

In some embodiments, the first receiving module 201 is configured to receive, via an Xn interface, the indication message sent by the target MN-CU.

In some embodiments, the indication message is a user-side Xn interface address indication message.

An embodiment of the present disclosure further provides a computer device, including: one or more processors, and a storage device. The storage device has stored thereon one or more programs which, when executed by the one or more processors, cause the one or more processors to implement the MR-DC full configuration method described above.

An embodiment of the present disclosure further provides a computer-readable medium having stored thereon a computer program which implements the MR-DC full configuration method described above when being executed.

The storage device may include a Random Access Memory (RAM), and may further include a non-volatile memory, e.g., at least one magnetic storage device. Optionally, the storage device may be at least one storage device located away from the processor.

The processor may be a general-purpose processor including a Central Processing Unit (CPU), a Network Processor (NP) and the like. The processor may also be a Digital Signal Processor (DSP), an Application Specific Integrated Circuit (ASIC), a Field-Programmable Gate Array (FGPA) or other programmable logic devices, a discrete gate or a transistor logic device, and a discrete hardware component.

It should be understood by those of ordinary skill in the art that the functional modules/units in all or some of the operations and the devices in the method disclosed above may be implemented as software, firmware, hardware, or suitable combinations thereof. If implemented as hardware, the division between the functional modules/units stated above is not necessarily corresponding to the division of physical components; for example, one physical component may have a plurality of functions, or one function or operation may be performed through cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, an RAM, a Read-Only Memory (ROM), an Electrically Erasable Programmable Read-Only Memory (EEPROM), a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses the exemplary implementations using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular implementation can be used alone or in combination with features, characteristics and/or elements described in connection with other implementations. Therefore, it should be understood by those of ordinary skill in the art that various changes in the forms and the details can be made without departing from the scope of the present disclosure of the appended claims.

## Claims

1. A Multi-Radio Dual Connectivity (MR-DC) full configuration method applied to a target master node-central unit (MN-CU), comprising:
in response to determining that a target master node-distributed unit (MN-DU) completes full configuration, sending an indication message to a target secondary node-central unit (SN-CU), with the indication message configured to instruct the target SN-CU to perform full configuration.

2. The method of claim 1, wherein sending the indication message to the target SN-CU comprises: sending the indication message to the target SN-CU via an Xn interface.

3. The method of claim 1 or 2, wherein the indication message is a user-side Xn interface address indication message.

4. An MR-DC full configuration method applied to a target SN-CU, comprising:
receiving an indication message sent by a target MN-CU, with the indication message configured to instruct the target SN-CU to perform full configuration; and
performing full configuration.

5. The method of claim 4, wherein after performing full configuration, the method further comprises:
sending a user context modification request message to a target secondary node-distributed unit (SN-DU), with the user context modification request message configured to instruct the target SN-DU to perform full configuration; and
receiving a user context modification response message sent by the target SN-DU, with the user context modification response message sent by the target SN-DU after the target SN-DU completes full configuration.

6. The method of claim 4 or 5, wherein receiving the indication message sent by the target MN-CU comprises: receiving, via an Xn interface, the indication message sent by the target MN-CU.

7. The method of claim 4, wherein the indication message is a user-side Xn interface address indication message.

8. An MR-DC full configuration apparatus which is a target MN-CU, comprising a determination module and a full configuration indication module, wherein the determination module is configured to determine whether a target MN-DU completes full configuration; and
the full configuration indication module is configured to send, in response to a case where the determination module determines that the target MN-DU completes full configuration, an indication message to a target SN-CU, with the indication message configured to instruct the target SN-CU to perform full configuration.

9. An MR-DC full configuration apparatus which is an SN-CU, comprising a first receiving module and a full configuration module, wherein the first receiving module is configured to receive an indication message sent by a target MN-CU, with the indication message configured to instruct the SN-CU to perform full configuration; and
the full configuration module is configured to perform full configuration.

10. A computer device, comprising:
one or more processors; and
a storage device having one or more programs stored thereon;
wherein, when the one or more programs are executed by the one or more processors, the one or more processors are caused to implement the MR-DC full configuration method of any one of claims 1 to 7.

11. A computer-readable medium having a computer program stored thereon, wherein, when being executed, the program implements the MR-DC full configuration method of any one of claims 1 to 7.
